(19) Europäisches Patentamt
European Patent Office
Office européen des brevets

(11) **EP 2 595 845 B1**

(12) **FASCICULE DE BREVET EUROPEEN**

(45) Date de publication et mention de la délivrance du brevet:
**01.04.2015 Bulletin 2015/14**

(21) Numéro de dépôt: **11730985.6**

(22) Date de dépôt: **13.07.2011**

(51) Int Cl.:
**B60S 5/04** *(2006.01)*  **B29C 73/22** *(2006.01)*

(86) Numéro de dépôt international:
**PCT/EP2011/061915**

(87) Numéro de publication internationale:
**WO 2012/010471 (26.01.2012 Gazette 2012/04)**

(54) **PROCEDE ET DISPOSITIF DE CONTROLE ET/OU D'AJUSTEMENT DE PRESSION POUR UN ENSEMBLE MONTE**

VERFAHREN UND VORRICHTUNG ZUM REIFENDRUCK-KONTROLLE UND -REGELUNG IN MONTIERTEN REIFEN.

PROCESS AND APPARATUS FOR CONTROLLING AND/OR ADJUSTING THE PRESSURE OF MOUNTED TIRES.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2010 FR 1055924**

(43) Date de publication de la demande:
**29.05.2013 Bulletin 2013/22**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeurs:
• **BESTGEN, Luc**
**F-63040 Clermont-Ferrand Cedex 9 (FR)**
• **MEGEVAND, Rudy**
**F-63040 Clermont-Ferrand Cedex 9 (FR)**

(74) Mandataire: **Le Cam, Stéphane Georges Elie**
**Manufacture Francaise des Pneumatiques Michelin**
**23, place des Carmes-Déchaux**
**SGD/LG/PI - F35- Ladoux**
**63040 Clermont-Ferrand Cedex 9 (FR)**

(56) Documents cités:
**EP-A1- 1 944 176**      **EP-A1- 2 042 296**
**WO-A1-99/28115**      **DE-A1- 10 106 468**
**FR-A1- 2 917 992**      **FR-A1- 2 917 996**
**US-A1- 2009 193 937**

**Description**

L'invention concerne un procédé et un dispositif de contrôle et/ou d'ajustement de pression d'un ensemble monté, constitué d'un pneumatique gonflé monté sur une jante, pour un véhicule.

Bien que non limitée à cette application, l'invention sera plus particulièrement décrite en référence à un ensemble monté pour un véhicule à deux roues de type bicyclette et, encore plus particulièrement, à un ensemble monté « tubeless », comprenant un pneumatique «tubeless», c'est-à-dire sans chambre à air.

Le développement de l'utilisation de la bicyclette en milieu urbain, comme moyen de transport individuel, a conduit à l'émergence de propositions de location de bicyclettes en libre-service, en particulier dans les grandes villes. Des entreprises de location proposent aux usagers, des bicyclettes disponibles dans des parcs de stationnement spécifiques répartis dans différents quartiers de la ville. Un usager, souhaitant se rendre d'un point A à un point B, va ainsi prendre possession d'une bicyclette au parc de stationnement le plus proche du point A et la restituer au parc de stationnement à proximité du point B. Cette location est réalisée en libre-service, c'est-à-dire que l'usager prend possession et restitue la bicyclette de façon autonome, sans intermédiaire, grâce à la mise en place de dispositifs tels que, à titre d'exemple, des bornes de stationnement.

Compte tenu de la diversité et du nombre important d'utilisations, un tel service de location de bicyclettes en libre-service nécessite un service de maintenance garantissant le bon état de fonctionnement des véhicules loués. Cette maintenance est effectuée soit a posteriori, à titre de réparation suite à des dommages sur la bicyclette, soit a priori, à titre préventif pour limiter le risque de dommages.

Les pneumatiques représentent un poste important de la maintenance des bicyclettes. La maintenance a posteriori d'un pneumatique comprend essentiellement la réparation du pneumatique, suite à crevaison. La maintenance a priori ou préventive d'un pneumatique comprend essentiellement le contrôle et l'ajustement de la pression interne du pneumatique. Dans ce qui suit, nous désignerons la « pression interne du pneumatique » par le terme « pression ».

En cas de crevaison d'un pneumatique « tube type », c'est-à-dire un pneumatique avec chambre à air, la maintenance a posteriori du pneumatique consiste à obturer le ou les trous décelés dans la chambre à air à l'aide de pièces adhésives.

Pour limiter le risque de crevaison, un pneumatique pour bicyclette, dans le cadre d'un service de location en libre-service, est avantageusement un pneumatique « tubeless », c'est-à-dire sans chambre à air disposée à l'intérieur du pneumatique. Cette absence de chambre à air limite le risque de perte de pression suite à la détérioration par perçage de la chambre à air, et, par conséquent, évite la réparation de la chambre à air, qui est une opération de maintenance a posteriori longue.

En cas de crevaison d'un pneumatique « tubeless », le procédé de réparation classique consiste en la mise en place d'une pièce obturante sur le trou de crevaison du pneumatique. Comme solution alternative, il a été proposé des dispositifs auto obturants, tels que des matériaux polymériques auto obturants, mis en place sur toute ou partie de la paroi de la cavité interne du pneumatique au stade de la fabrication du pneumatique, tels que décrits par exemple par les documents «Pneumatique avec couche auto obturante » (WO2009/000742 A1) et «Procédé d'application d'une couche de matériau à l'intérieur d'un pneumatique pour cycle » (WO2009/000744 A1). Ces matériaux polymériques auto obturants rebouchent le trou de crevaison automatiquement dès l'occurrence du perçage, sans nécessité d'intervention humaine extérieure, ce qui élimine donc une opération de maintenance a posteriori.

En ce qui concerne la maintenance préventive, vis-à-vis du risque de crevaison, le contrôle de la pression et son ajustement éventuel à une valeur au moins égale à une pression de consigne, est une opération essentielle.

La pression de consigne est une pression d'usage conseillée, comprise, par exemple, entre 3 et 4 bars pour un pneumatique à usage urbain. En pratique, la pression de consigne n'est pas toujours respectée, soit en raison de fuites accidentelles entre le pneumatique et sa jante de montage ou au niveau de la valve de gonflage, soit, par exemple, en raison d'un dégonflage volontaire du pneumatique par l'usager en vue d'un meilleur confort de transport: d'où la nécessité d'un ajustement de pression. Si la pression effective mesurée est sensiblement inférieure à la pression de consigne, par exemple inférieure d'au moins 0.75 bar, il existe un risque de crevaison du pneumatique suite à un éventuel choc du pneumatique contre un obstacle, entraînant un pincement du pneumatique contre le crochet de jante et sa crevaison.

Le procédé classique de contrôle et/ou d'ajustement de pression utilise habituellement un dispositif de contrôle et/ou d'ajustement de pression assurant, d'une part la fonction de contrôle de la pression, d'autre part la fonction d'ajustement de la pression par gonflage/dégonflage. Ce dispositif de contrôle et/ou d'ajustement de pression comprend un embout de gonflage destiné à être connecté à une valve de gonflage, fixée sur la jante de l'ensemble monté et assurant l'interface avec l'air interne du pneumatique. Le dispositif de contrôle et/ou d'ajustement de pression comprend en outre un moyen de mesure de pression, tel qu'un manomètre, et un moyen d'ajustement de pression par gonflage/dégonflage, tel qu'un compresseur relié à un réservoir d'air.

Les principales étapes d'un procédé classique de contrôle et/ou d'ajustement de pression sont les suivantes :

- Rotation de l'ensemble monté autour de son axe de rotation, de façon à rendre accessible la valve de gonflage, fixée sur la jante de l'ensemble monté.

- Dévissage du bouchon protecteur de la valve de gonflage.
- Mise en place de l'embout de gonflage du dispositif de contrôle et/ou d'ajustement de pression sur la valve de gonflage.
- Mesure de la pression initiale à l'aide du moyen de mesure de pression du dispositif de contrôle et/ou d'ajustement de pression, tel qu'un manomètre.
- Si la pression initiale mesurée est inférieure à la pression de consigne, gonflage du pneumatique jusqu'à une valeur finale de pression au moins égale à la pression de consigne.
- Retrait de l'embout de gonflage du dispositif de contrôle et/ou d'ajustement de pression sur la valve de gonflage.
- Revissage du bouchon protecteur de la valve de gonflage.

Le procédé de contrôle et/ou d'ajustement de pression précédemment décrit présente un certain nombre d'inconvénients. Tout d'abord, le nombre d'étapes du procédé d'ajustement de pression implique un délai d'intervention pénalisant pour l'exploitation d'un parc de bicyclettes en libre-service. Par ailleurs, l'accessibilité à la valve de gonflage, fixée sur la jante, peut être malaisée : elle peut éventuellement nécessiter d'extraire la bicyclette de sa borne de stationnement pour pouvoir faire tourner l'ensemble monté autour de son axe de rotation, de façon à rendre accessible la valve de gonflage. Enfin, qu'un ajustement de pression soit nécessaire ou non, le délai d'intervention pour un ensemble monté donné est sensiblement le même, car, dans les deux cas, toutes les étapes du procédé d'ajustement de pression, sauf celle du gonflage, qui constituent la plus grande partie du délai d'intervention sont nécessaires.

Document US 2009/0193937 A1 montre un procédé et dispositif de contrôle et/ou d'ajustement de pression classique tel que décrit dans le préambule des revendications 1 et 11.

Les inventeurs se sont donnés pour objectif de simplifier le procédé classique de contrôle et/ou d'ajustement de pression pour un ensemble monté pour un véhicule, en particulier pour un véhicule à deux roues, et plus précisément d'en réduire le nombre d'étapes, et de proposer un dispositif de contrôle et/ou d'ajustement de pression pour la mise en oeuvre de ce procédé.

Cet objectif a été atteint, selon l'invention, par un procédé de contrôle et/ou d'ajustement de pression d'un ensemble monté pour un véhicule, l'ensemble monté étant constitué d'un pneumatique préférentiellement « tubeless » monté sur une jante et gonflé à une pression initiale, le pneumatique comprenant une surface intérieure constituant la paroi de la cavité du pneumatique en contact avec l'air interne, la paroi de la cavité du pneumatique étant au moins en partie recouverte par un matériau auto obturant :

- en introduisant dans la cavité du pneumatique une interface de gonflage, par perçage d'un trou dans la paroi de la cavité du pneumatique dans une partie recouverte par le matériau auto obturant,
- en extrayant l'interface de gonflage, de la cavité du pneumatique, après gonflage.
- le trou de perçage dans la paroi de la cavité du pneumatique étant obturé spontanément par le matériau auto obturant, après extraction de l'interface de gonflage.

On appelle pression initiale la pression de gonflage du pneumatique mesurée lors de l'opération initiale de contrôle de la pression, au début de la maintenance.

Selon l'invention, on introduit dans la cavité du pneumatique une interface de gonflage, par perçage d'un trou dans la paroi de la cavité du pneumatique dans une partie recouverte par le matériau auto obturant.

L'interface de gonflage est l'élément du moyen de gonflage du dispositif de contrôle et/ou d'ajustement de pression, qui conduit l'air de gonflage à l'intérieur de la cavité du pneumatique. Dans un dispositif classique de contrôle et/ou d'ajustement de pression, l'interface de gonflage est constitué par un embout de gonflage destiné à être connecté à la valve de gonflage, elle-même généralement fixée sur la jante de l'ensemble monté. Selon l'invention, l'interface de gonflage est introduite dans la cavité du pneumatique, par l'intermédiaire d'un trou résultant d'un perçage traversant de part en en part la paroi du pneumatique. L'avantage principal de cette solution est d'accéder directement à la cavité du pneumatique sans passer par la valve de gonflage, qui peut être soit difficile d'accès en raison de son positionnement sur l'ensemble monté du véhicule en stationnement, soit inexistante dans l'hypothèse d'une jante sans valve. Une jante sans valve est en effet particulièrement intéressante pour un ensemble monté de bicyclette de location, afin d'éviter toute intervention intempestive de l'utilisateur sur la pression.

On appelle matériau auto obturant un matériau recouvrant au moins en partie la paroi de la cavité du pneumatique et apte à obturer spontanément, sans intervention humaine, un trou de taille « raisonnable » réalisé dans la paroi du pneumatique. Par taille « raisonnable », on entend un trou résultant du perçage du pneumatique par un objet usuellement rencontré sur une voie urbaine, tel qu'un clou, un morceau de verre...La paroi de la cavité du pneumatique est recouverte en partie par un matériau auto obturant, c'est-à-dire dans les zones d'occurrences de crevaison les plus élevées telles que le sommet ou les flancs du pneumatique. La paroi de la cavité du pneumatique peut également être entièrement recouverte par une couche de matériau auto obturant, avec d'éventuelles surépaisseurs dans les zones d'occurrences de crevaison les plus élevées. Le matériau auto obturant est généralement mis en place sur la paroi de la cavité du pneumatique au moment de la fabrication du pneumatique. La présence de matériau auto obturant dans une partie de paroi de la cavité du pneumatique donnée peut être repérée par un élément de marquage disposé sur la surface extérieure du pneumatique en vis-à-vis de la partie de paroi de la cavité du pneumatique concernée.

Après gonflage, l'interface de gonflage est extraite de la cavité du pneumatique, ce qui entraîne l'apparition du trou de perçage dans la paroi de la cavité du pneumatique.

Le trou de perçage dans la paroi de la cavité du pneumatique est alors avantageusement obturé spontanément, c'est-à-dire sans opération de rebouchage par la main de l'homme, par le matériau auto obturant présent au voisinage du trou. Pour garantir le rebouchage du trou de perçage, il faut garantir la présence en quantité suffisante de matériau auto obturant au voisinage du trou de perçage. Cette garantie peut être obtenue en indiquant sur la surface extérieure du pneumatique par un marquage distinctif, par exemple, la ou les zones préférentielles de perçage.

Un premier mode de réalisation de l'invention est d'introduire l'interface de gonflage dans la cavité du pneumatique, avant mesure de la pression initiale. En d'autres termes, il y a introduction systématique et inconditionnelle de l'interface de gonflage, dès le début de l'opération de maintenance, sans mesure préalable de la pression, ce qui est un gain de temps.

Selon ce premier mode de réalisation, on ajuste la pression à une pression finale au moins égale à une pression de consigne, au moyen de l'interface de gonflage reliée à un moyen de gonflage fournissant l'air de gonflage. On appelle pression de consigne la pression d'usage conseillée pour une utilisation donnée du pneumatique. Dans le cas d'un pneumatique pour un véhicule à 2 roues, tel qu'un cycle à usage urbain, la pression d'usage conseillée pour une utilisation donnée du pneumatique est, par exemple, comprise entre 3 et 4 bar. Contrairement à la pratique habituelle, l'ajustement de pression n'est pas réalisé par la valve de gonflage, mais par l'interface de gonflage.

Un deuxième mode de réalisation de l'invention est d'introduire l'interface de gonflage dans la cavité du pneumatique, après mesure de la pression initiale et si la pression initiale mesurée est inférieure à une pression d'alerte. En d'autres termes, il y a introduction non systématique et conditionnelle de l'interface de gonflage, après une mesure préalable de la pression, ce qui limite le nombre de perçages au strict nécessaire et diminue le risque de détérioration de l'armature de renforcement du pneumatique, suite à un nombre élevé de perçages. La condition d'introduction de l'interface de gonflage est que la pression initiale mesurée soit inférieure à la pression d'alerte. On appelle pression d'alerte la pression minimale recommandée pour une utilisation donnée du pneumatique, en deçà de laquelle le risque de crevaison par pincement sur le crochet de jante est important. Dans le cas d'un pneumatique pour un véhicule à 2 roues, tel qu'un cycle à usage urbain, la pression d'alerte peut être prise égale à la pression de consigne ou pression d'usage conseillée diminuée de 0.75 bar. A titre d'exemple, pour une pression de consigne de 4 bar, la pression d'alerte peut être prise égale à 3.25 bar.

Selon ce deuxième mode de réalisation et comme dans le premier mode de réalisation, on ajuste la pression à une pression finale au moins égale à une pression de consigne, au moyen de l'interface de gonflage reliée à un moyen de gonflage fournissant l'air de gonflage.

La pression de consigne est avantageusement au moins égale à la pression d'alerte augmentée de 0.75 bar, pour que la différence entre la pression finale et la pression d'alerte soit suffisante pour compenser la perte de pression naturelle d'un pneumatique « tubeless » qui n'est pas parfaitement étanche. A titre d'exemple, la perte de pression d'un pneumatique « tubeless » peut être comprise entre 0.5 bar et 1 bar par mois. Toutefois, la pression de consigne ne doit pas être trop élevée pour éviter tout problème d'inconfort de l'usager, en raison d'une rigidité trop élevée du pneumatique.

Selon une variante du premier ou du deuxième mode de réalisation, on mesure la pression, au cours de l'ajustement de pression, à l'aide d'un moyen de mesure directe de pression, connecté à l'interface de gonflage. Un moyen de mesure directe de pression peut être, à titre d'exemple, un manomètre.

Selon une autre variante du deuxième mode de réalisation, on mesure la pression, au cours de l'ajustement de pression, à l'aide d'un moyen de mesure indirecte de pression, sans entrer en contact avec l'air interne du pneumatique. Un moyen de mesure indirecte de pression, ne nécessitant pas de contact avec l'air interne du pneumatique, n'est relié ni à la valve de gonflage, ni à l'interface de gonflage introduite dans la paroi de la cavité du pneumatique.

Une mesure indirecte de la pression permet d'éviter de passer par la valve, d'utiliser un manomètre et donc de limiter le nombre d'opérations : rendre la valve accessible en faisant une rotation de l'ensemble monté, visser/dévisser le bouchon de valve, visser/dévisser l'embout de gonflage sur la valve ; ce qui permet de réduire le temps d'intervention. Un autre avantage est de pouvoir mesurer la pression d'un ensemble monté sans valve.

En particulier, une mesure indirecte de la pression initiale permet d'éviter de percer systématiquement le pneumatique pour introduire dans la cavité du pneumatique une interface de gonflage permettant de déterminer la pression initiale à l'aide d'un manomètre. Si la pression initiale mesurée est supérieure à la pression d'alerte, l'ajustement de pression n'est pas nécessaire. Par conséquent, la mise en place de l'interface de gonflage par perçage de la paroi de la cavité du pneumatique n'est pas réalisée.

Selon une variante préférée du deuxième mode de réalisation on mesure indirectement la pression en mesurant la déformation du pneumatique, selon la direction d'un écrasement du pneumatique, réalisé entre deux points dont l'un au moins appartient à la surface extérieure du pneumatique en contact avec l'air atmosphérique, et en déterminant la pression à l'aide d'un modèle établi au préalable et liant la déformation et la pression.

L'écrasement du pneumatique est réalisé par un moyen d'écrasement comprenant deux interfaces appliquant l'effort d'écrasement au pneumatique. En pratique, ces deux interfaces sont appliquées soit en deux points appartenant respectivement à chacun des deux flancs du pneumatique, soit en deux points appartenant respectivement au sommet du pneumatique et à la jante. L'écrasement du pneumatique peut être réalisé à effort imposé ou à déplacement imposé.

En appliquant un écrasement au pneumatique, on déforme le pneumatique entre les deux points d'application de l'effort d'écrasement. La déformation mesurée est la variation relative de distance entre les deux points d'application de l'effort d'écrasement. Cette déformation est corrélée à la rigidité du pneumatique, elle-même fonction de la pression. La détermination de cette déformation permet donc de remonter à la valeur de pression, grâce à un modèle mathématique et/ou des abaques exprimant la pression en fonction de la déformation établis à partir de mesures expérimentales.

La mesure de déformation du pneumatique permet ainsi d'accéder à la pression correspondante à l'aide d'une relation entre la pression et l'écrasement mesurée. A titre d'exemple, une telle relation peut être du type

$$P = A * [Z / (LI - LF)^{1/B}],$$

avec :

- P : pression mesurée,
- A et B : deux constantes dépendant du pneumatique et de la forme et de la surface des interfaces d'application de l'effort d'écrasement,
- Z : effort d'écrasement du pneumatique,
- LI : distance initiale entre les interfaces d'application de l'effort d'écrasement (en pratique largeur ou hauteur intiale du pneu, avant écrasement),
- LF : distance finale entre les interfaces d'application de l'effort d'écrasement (en pratique largeur ou hauteur finale du pneu, après écrasement).

La connaissance de cette relation permet d'étalonner le moyen de mesure indirecte de pression vis-à-vis des pressions d'alerte et de consigne et éventuellement d'automatiser entièrement la mesure indirecte de pression.

Selon une première variante du mode de réalisation préféré de mesure indirecte de la pression par mesure de déformation, l'écrasement du pneumatique est avantageusement réalisé entre deux points appartenant respectivement à la surface extérieure de chaque flanc et symétriques par rapport au plan équatorial. Cette première variante de réalisation présente un avantage ergonomique, car le moyen de mesure indirecte de pression n'interfère pas avec la roue. Dans le cas d'une roue de bicyclette comportant des rayons, la mise en place du moyen de mesure indirecte de pression n'est pas gênée par la présence des rayons de la roue.

Selon une deuxième variante du mode de réalisation préféré de mesure indirecte de la pression par mesure de déformation, l'écrasement du pneumatique est réalisé entre deux points appartenant respectivement à la surface extérieure du sommet et à la surface radialement intérieure de la jante et positionnés dans le plan équatorial. Dans cette deuxième variante de réalisation, l'interface d'application de l'effort d'écrasement en contact avec la jante est avantageusement fixe au cours de l'application de l'écrasement.

On introduit avantageusement dans la cavité du pneumatique l'interface de gonflage, par perçage du sommet de pneumatique, la partie correspondante de paroi de la cavité du pneumatique étant recouverte par le matériau auto obturant.

En ce qui concerne la zone d'introduction de l'interface de gonflage par perçage, l'interface de gonflage peut être introduite soit au niveau du sommet du pneumatique, destiné à entrer en contact avec le sol par l'intermédiaire de la bande de roulement, soit au niveau des flancs, qui prolongent le sommet de part et d'autre.

Le choix de la zone d'introduction de l'interface de gonflage par perçage est conditionné par l'accessibilité de la zone de perçage, par l'épaisseur du pneumatique dans la zone de perçage, l'épaisseur de l'armature de renforcement étant en particulier plus épaisse au niveau du sommet, et par la présence d'un matériau auto obturant dans la zone de perçage. Il peut également être conditionné par le niveau des sollicitations mécaniques, en particulier de flexion, dans l'armature de renforcement ainsi que par le nombre de perçages déjà réalisés dans une même zone de perçage, lors de contrôles de pression antérieurs, pour éviter de percer le pneumatique toujours au même endroit.

On introduit préférentiellement dans la cavité du pneumatique l'interface de gonflage, par perçage du sommet de pneumatique, car la partie correspondante de la paroi de la cavité du pneumatique est généralement préférentiellement recouverte par le matériau auto obturant en vue d'une obturation spontanée de tout trou survenant accidentellement dans le sommet, en utilisation. Dans le cas d'un perçage hors du sommet, tel que dans un flanc, il est nécessaire d'avoir du mélange auto obturant dans la zone de perçage en plus de la zone de sommet. En outre un perçage du sommet fragilise moins l'armature de carcasse, qui est l'armature de renforcement reliant les deux bourrelets du pneumatique destinés à assurer le contact avec la jante, et qui est moins sollicitée mécaniquement dans le sommet que dans les flancs.

On propose encore un dispositif de contrôle et/ou d'ajustement de pression pour la mise en oeuvre du procédé de contrôle et/ou d'ajustement de pression précédemment décrit.

Selon l'invention, le dispositif de contrôle et/ou d'ajustement de pression comprend une interface de gonflage, destinée à être introduite dans la cavité du pneumatique, par perçage d'un trou dans la paroi de la cavité du pneumatique dans une partie recouverte par le matériau auto obturant. L'interface de gonflage permet avantageusement d'accéder directement à la cavité du pneumatique sans passer par la valve de gonflage, qui peut être soit difficile d'accès en raison de son positionnement sur l'ensemble monté du véhicule en stationnement, soit inexistante dans l'hypothèse d'une jante sans valve.

L'interface de gonflage est avantageusement un tube creux de diamètre extérieur au plus égal à 4 mm, et préférentiellement au plus égal à 1.5 mm. L'interface de gonflage est assimilable à une aiguille pouvant assurer la double fonction de perçage de la paroi de la cavité du pneumatique et de gonflage. Ces deux fonctions peuvent toutefois être dissociées dans l'hypothèse d'un moyen de perçage indépendant de l'interface de gonflage. En outre, un diamètre limité permet de ne pas affaiblir mécaniquement la structure de renforcement du pneumatique en coupant un nombre trop élevé d'éléments de renforcement, tels que des câbles textiles, constitutifs de l'armature de renforcement du pneumatique. Par ailleurs, un diamètre limité génère un trou dans la paroi de la cavité du pneumatique pouvant être aisément reboucher par le matériau auto obturant ; ce qui devient difficile au-delà d'un certain diamètre.

Selon un mode de réalisation avantageux de l'invention, le dispositif de contrôle et/ou d'ajustement de pression comprend un moyen de mesure directe de pression, connecté à l'interface de gonflage, et/ou un moyen de mesure indirecte de pression permettant de mesurer la pression de gonflage, sans entrer en contact avec l'air interne du pneumatique.

Un dispositif de contrôle et/ou d'ajustement de pression comprenant uniquement un moyen de mesure directe de pression, connecté à l'interface de gonflage, est utilisé préférentiellement pour le premier mode de réalisation du procédé de contrôle et/ou d'ajustement de pression, consistant à introduire l'interface de gonflage dans la cavité du pneumatique, avant mesure de la pression initiale. Toute mesure de pression, postérieure à l'introduction de l'interface de gonflage, est alors réalisée directement par l'intermédiaire de l'interface de gonflage.

Un dispositif de contrôle et/ou d'ajustement de pression, comprenant uniquement un moyen de mesure indirecte de pression est utilisé préférentiellement pour le deuxième mode de réalisation du procédé de contrôle et/ou d'ajustement de pression, consistant à introduire l'interface de gonflage dans la cavité du pneumatique, après mesure de la pression initiale et si la pression initiale est inférieure à la pression d'alerte. La mesure de la pression initiale et toute mesure de pression, postérieure à l'introduction de l'interface de gonflage, sont réalisées indirectement par le moyen de mesure indirecte de pression.

Un dispositif de contrôle et/ou d'ajustement de pression comprenant à la fois un moyen de mesure indirecte de pression et un moyen de mesure directe de pression, connecté à l'interface de gonflage, est utilisé préférentiellement pour le deuxième mode de réalisation du procédé de contrôle et/ou d'ajustement de pression, consistant à introduire l'interface de gonflage dans la cavité du pneumatique, après mesure de la pression initiale et si la pression initiale est inférieure à la pression d'alerte. Dans ce cas, la mesure de pression initiale est alors réalisée indirectement par le moyen de mesure indirecte de pression. Toute mesure de pression, postérieure à l'introduction de l'interface de gonflage, peut alors être réalisée soit indirectement par le moyen de mesure indirecte de pression, soit directement par l'intermédiaire de l'interface de gonflage.

Selon un mode de réalisation préféré de l'invention, le dispositif de contrôle et/ou d'ajustement de pression comprend un moyen de mesure indirecte de pression par mesure de la déformation du pneumatique selon la direction d'un écrasement du pneumatique.

Selon une variante du mode de réalisation préféré de l'invention, le moyen de mesure indirecte de pression par mesure de la déformation selon la direction d'un écrasement du pneumatique comprend deux interfaces d'application de l'écrasement au pneumatique, destinées à entrer en contact avec deux points dont l'un au moins appartient à la surface extérieure du pneumatique en contact avec l'air atmosphérique. Ce moyen de mesure de déformation est un moyen simple de mise en oeuvre : il suffit d'insérer l'ensemble monté entre deux interfaces mécaniques destinées à appliquer la sollicitation mécanique d'écrasement qui est soit un effort imposé, soit une déformation imposée.

Selon une autre variante du mode de réalisation préféré de l'invention, le dispositif de contrôle et/ou d'ajustement de pression comprend une interface de gonflage intégrée à au moins une interface d'application de l'écrasement du moyen de mesure indirecte de pression, ce qui permet avantageusement de positionner simultanément le moyen de mesure indirecte de pression et l'interface de gonflage, d'où un gain en temps et en ergonomie.

Selon l'invention, l'utilisation d'un procédé de contrôle et/ou d'ajustement de pression tel que précédemment décrit est plus particulièrement intéressante pour un véhicule à deux roues et, encore plus particulièrement, pour une bicyclette.

Les caractéristiques et autres avantages de l'invention seront mieux compris à l'aide des figures annexées 1 à 4 :

- la figure 1 présente un premier mode de réalisation de l'invention.
- la figure 2 présente une première variante d'un deuxième mode de réalisation de l'invention.

- la figure 3 présente une deuxième variante d'un deuxième mode de réalisation de l'invention.
- la figure 4 présente un exemple d'évolution de l'écrasement (LF-LI) d'un pneumatique de bicyclette, en fonction de la pression.

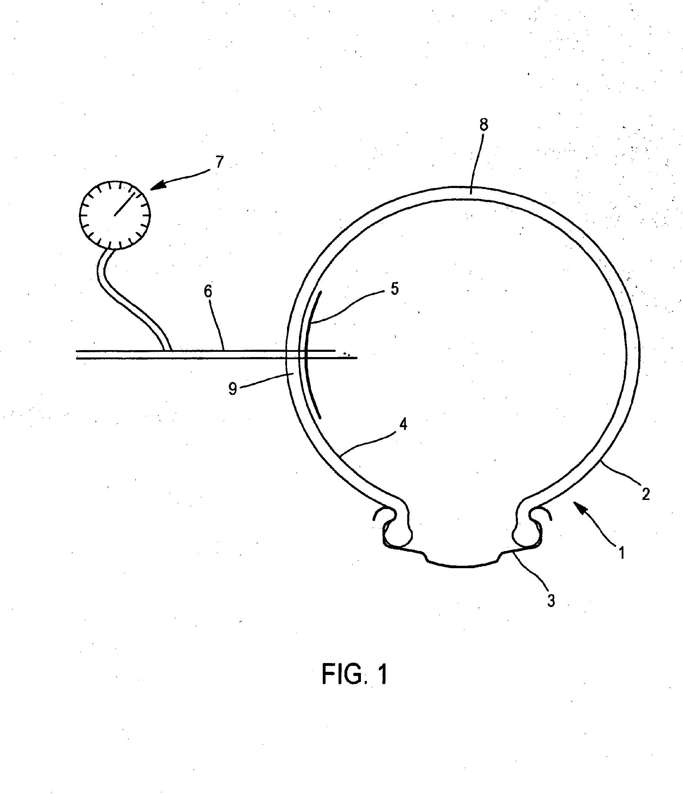

Les figures 1 à 4 ne sont pas représentées à l'échelle.

La figure 1 présente un premier mode de réalisation d'un dispositif de contrôle et/ou d'ajustement de pression d'un ensemble monté (1) pour une bicyclette. L'ensemble monté est constitué d'un pneumatique (2) « tubeless » monté sur une jante (3) et gonflé à une pression initiale. Le pneumatique comprend une surface intérieure constituant la paroi (4) de la cavité du pneumatique en contact avec l'air interne. La paroi de la cavité du pneumatique est recouverte par un matériau auto obturant (5) dans la zone de flanc (9), mais pas dans la zone de sommet (8). Le dispositif de contrôle et/ou d'ajustement de pression comprend un moyen de mesure directe de pression (7), de type manomètre, connecté à l'interface de gonflage (6), de type tube creux.

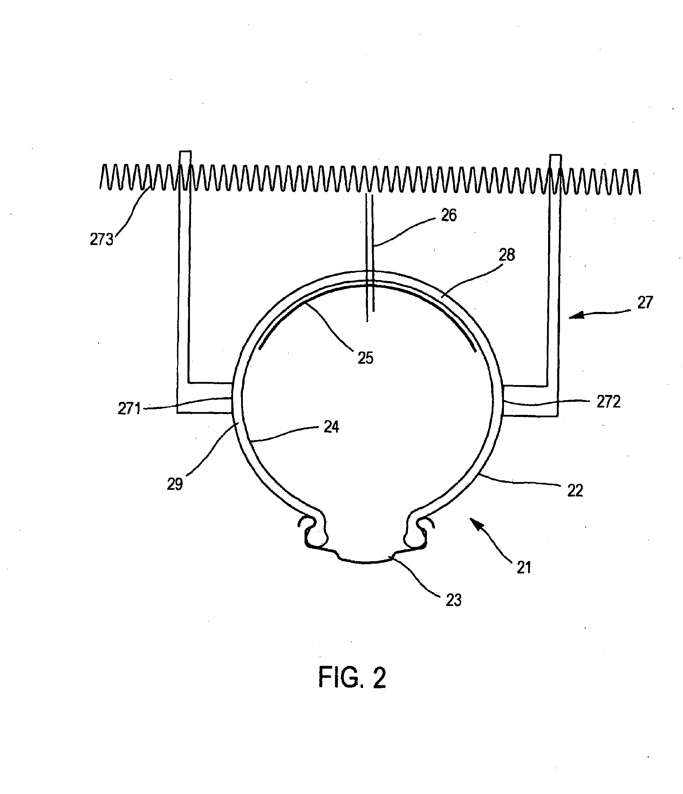

La figure 2 présente une première variante d'un deuxième mode de réalisation d'un dispositif de contrôle et/ou d'ajustement de pression d'un ensemble monté (21) pour une bicyclette. L'ensemble monté est constitué d'un pneumatique (22) « tubeless » monté sur une jante (23) et gonflé à une pression initiale. Le pneumatique comprend une surface intérieure constituant la paroi (24) de la cavité du pneumatique en contact avec l'air interne. La paroi de la cavité du pneumatique est recouverte par un matériau auto obturant (25) dans la zone de sommet (28). Le dispositif de contrôle et/ou d'ajustement de pression comprend un moyen de mesure indirecte de pression (27) par mesure de la déformation selon la direction d'un écrasement du pneumatique. Le moyen de mesure indirecte de pression (27) par mesure de la déformation comprend deux interfaces d'application de l'écrasement au pneumatique, destinées à entrer en contact avec deux points (271, 272) appartenant respectivement à la surface extérieure de chaque flanc (29) et symétriques par rapport au plan équatorial du pneumatique, ainsi qu'un ressort de rappel (273). Le dispositif de contrôle et/ou d'ajustement de pression comprend une interface de gonflage (26), de type tube creux, introduite dans la cavité du pneumatique, par perçage d'un trou dans la paroi de la cavité du pneumatique dans la zone de sommet (28) recouverte par le matériau auto obturant (25).

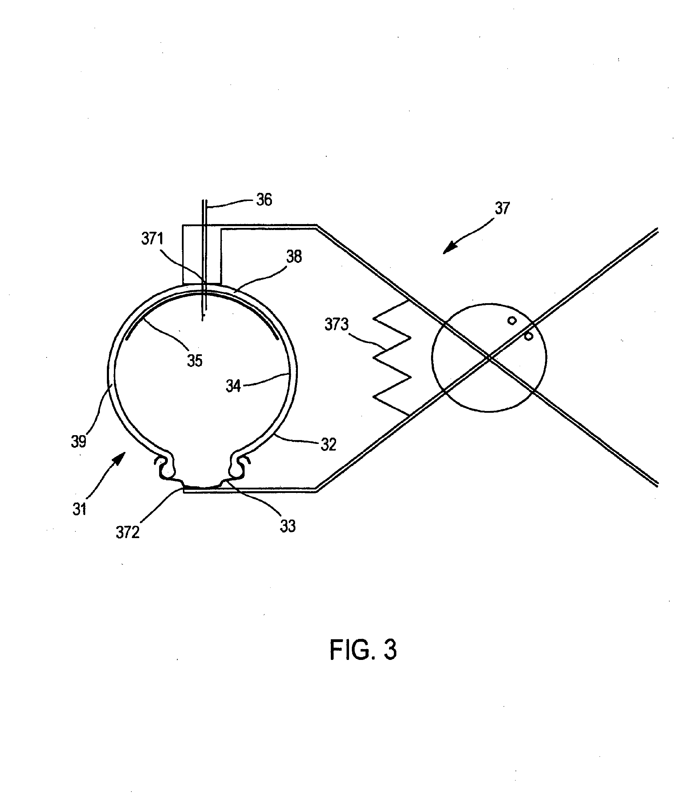

La figure 3 présente une deuxième variante d'un deuxième mode de réalisation d'un dispositif de contrôle et/ou d'ajustement de pression d'un ensemble monté (31) pour une bicyclette. L'ensemble monté est constitué d'un pneumatique (32) «tubeless» monté sur une jante (33) et gonflé à une pression initiale. Le pneumatique comprend une surface intérieure constituant la paroi (34) de la cavité du pneumatique en contact avec l'air interne. La paroi de la cavité du pneumatique est recouverte par un matériau auto obturant (35) dans la zone de sommet (38). Le dispositif de contrôle et/ou d'ajustement de pression comprend un moyen de mesure indirecte de pression (37) par mesure de la déformation selon la direction d'un écrasement du pneumatique. Le moyen de mesure indirecte de pression (37) par mesure de la déformation comprend deux interfaces d'application de l'écrasement au pneumatique, destinées à entrer en contact avec deux points (371, 372) appartenant respectivement à la surface extérieure du sommet et à la surface radialement intérieure de la jante et positionnés dans le plan équatorial, ainsi qu'un ressort de rappel (373). Le dispositif de contrôle et/ou d'ajustement de pression comprend une interface de gonflage (36), de type tube creux, introduite dans la cavité du pneumatique, par perçage d'un trou dans la paroi de la cavité du pneumatique dans la zone de sommet (38) recouverte par le matériau auto obturant (35). L'interface de gonflage (36) est intégrée à l'interface d'application (371) de l'écrasement du moyen de mesure indirecte de pression.

L'invention a été plus particulièrement étudiée pour un pneumatique à usage urbain de dimension 37/622 dont la pression conseillée d'usage conseillée est de 4 bars, ce qui a conduit à choisir une pression d'alerte et une pression de consigne respectivement égales à 3.25 bar et 4.5 bar.

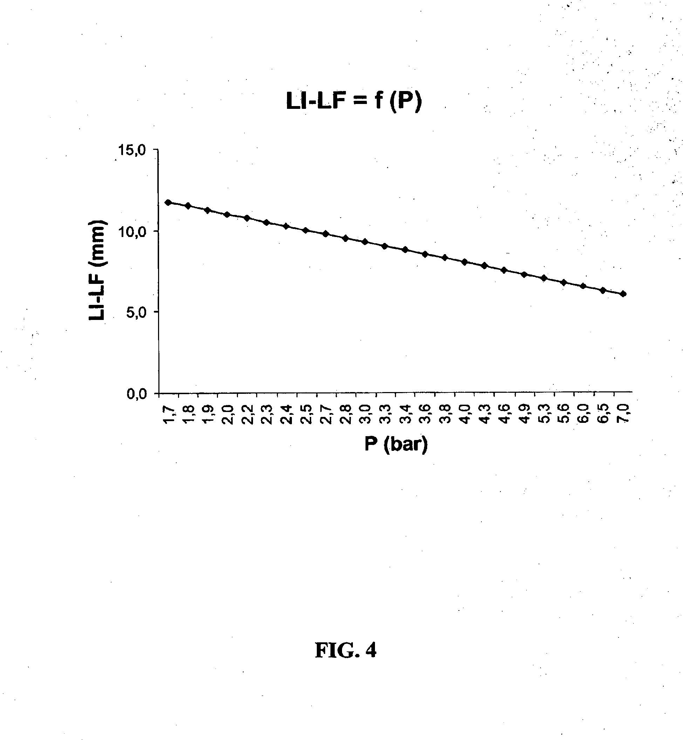

Dans l'exemple étudié correspondant au mode de réalisation représenté sur la figure 3, une mesure indirecte de la pression, par mesure de la déformation du pneumatique est réalisée entre le sommet et la jante. L'interface d'application de l'écrasement au pneumatique, destinée à entrer en contact avec le point (371) appartenant à la surface extérieure du sommet, a une surface circulaire de diamètre 6 mm. Le ressort de rappel (373) a une rigidité égale à 10N/mm. Lorsque le ressort de rappel est au repos, la distance entre les deux mors, c'est-à-dire entre deux interfaces d'application de l'écrasement au pneumatique (371, 372), est égale à 20 mm. La distance initiale LI entre les points d'application de l'écrasement est égale à 49 mm. La distance finale LF, correspondant à la pression d'alerte de 3.25 bar, dans le cas d'une mesure de déformation à effort imposé, est égale à 40.1 mm. La distance finale LF, correspondant à la pression de consigne de 4.5 bar, dans le cas d'une mesure de déformation à effort imposé, est égale à 41.4 mm. La figure 4 représente la variation de l'écrasement (LF-LI) en fonction de la pression P.

L'invention ne doit pas être interprétée comme étant limitée aux exemples illustrés sur les figures 1 à 3, mais peut être étendue à d'autres variantes de réalisation.

L'invention décrite plus particulièrement en référence à un ensemble monté constitué d'un pneumatique préférentiellement « tubeless » est également applicable à un pneumatique « tube type », c'est-à-dire avec chambre à air indépendante, sous réserve que ladite chambre à air ait la faculté de se reboucher de façon autonome, après perçage, à l'aide d'un mélange auto obturant ou tout autre moyen équivalent.

L'invention décrite plus particulièrement en référence à un ensemble monté pour un véhicule de type deux roues, tel qu'une bicyclette, peut être étendue à un pneumatique de véhicule de type deux roues motorisé, et, plus généralement, à un pneumatique de tout type de véhicule, avec une adaptation des pressions d'alerte et de consigne.

**Revendications**

1.  Procédé de contrôle et/ou d'ajustement de pression d'un ensemble monté (1, 21, 31) pour un véhicule, l'ensemble monté étant constitué d'un pneumatique (2, 22, 32) préférentiellement « tubeless » monté sur une jante (3, 23, 33) et gonflé à une pression initiale, le pneumatique comprenant une surface intérieure constituant la paroi (4, 24, 34) de la cavité du pneumatique en contact avec l'air interne, la paroi de la cavité du pneumatique étant au moins en partie recouverue par un matériau auto obturant (5, 25, 35), **caractérisé en ce qu**'on introduit dans la cavité du pneumatique une interface de gonflage (6, 26, 36), par perçage d'un trou dans la paroi de la cavité du pneumatique dans une partie recouverte par le matériau auto obturant, **en ce qu**'on extrait l'interface de gonflage, de la cavité du pneumatique, après gonflage, et **en ce que** le trou de perçage dans la paroi de la cavité du pneumatique est obturé spontanément par le matériau auto obturant, après extraction de l'interface de gonflage.

2.  Procédé de contrôle et/ou d'ajustement de pression d'un ensemble monté (1) selon la revendication 1, **caractérisé en ce qu**'on introduit l'interface de gonflage (6) dans la cavité du pneumatique, avant mesure de la pression initiale, et **en ce qu**'on ajuste la pression à une pression finale au moins égale à une pression de consigne, au moyen de l'interface de gonflage.

3.  Procédé de contrôle et/ou d'ajustement de pression d'un ensemble monté (21, 31) selon la revendication 1, **caractérisé en ce qu**'on introduit l'interface de gonflage (26, 36) dans la cavité du pneumatique, après mesure de la pression initiale et si la pression initiale mesurée est inférieure à une pression d'alerte, et **en ce qu**'on ajuste la pression à une pression finale au moins égale à une pression de consigne, strictement supérieure à la pression d'alerte, au moyen de l'interface de gonflage.

4.  Procédé de contrôle et/ou d'ajustement de pression d'un ensemble monté (21, 31) selon la revendication 3, **caractérisé en ce que** la pression de consigne est au moins égale à la pression d'alerte augmentée de 0.75 bar.

5.  Procédé de contrôle et/ou d'ajustement de pression d'un ensemble monté (1) selon l'une quelconque des revendications 1 à 4, **caractérisé en ce qu**'on mesure la pression, au cours de l'ajustement de pression, à l'aide d'un moyen de mesure directe de pression (7), connecté à l'interface de gonflage.

6.  Procédé de contrôle et/ou d'ajustement de pression d'un ensemble monté (21, 31) selon l'une quelconque des revendications 3 ou 4, **caractérisé en ce qu**'on mesure la pression, au cours de l'ajustement de pression, à l'aide d'un moyen de mesure indirecte de pression (27, 37), sans entrer en contact avec l'air interne du pneumatique.

7.  Procédé de contrôle et/ou d'ajustement d'un ensemble monté (21, 31) selon l'une quelconque des revendications 3, 4 ou 6, **caractérisé en ce qu**'on mesure indirectement la pression en mesurant la déformation du pneumatique, selon la direction d'un écrasement du pneumatique, réalisé entre deux points (271, 272; 371, 372) dont l'un au moins appartient à la surface extérieure du pneumatique en contact avec l'air atmosphérique, et en déterminant la pression à l'aide d'un modèle établi au préalable et liant la déformation et la pression.

8.  Procédé de contrôle et/ou d'ajustement de pression d'un ensemble monté (21) selon la revendication 7, le pneumatique (22) comprenant un sommet (28) prolongé par deux flancs (29) et étant symétrique par rapport au plan équatorial passant par le milieu du sommet, **caractérisé en ce que** l'écrasement du pneumatique est réalisé entre deux points (271, 272) appartenant respectivement à la surface extérieure de chaque flanc et symétriques par rapport au plan équatorial.

9.  Procédé de contrôle et/ou d'ajustement de pression d'un ensemble monté (31) selon la revendication 7, le pneumatique (32) comprenant un sommet (38) prolongé par deux flancs (39) et étant symétrique par rapport au plan équatorial passant par le milieu du sommet, **caractérisé en ce que** l'écrasement du pneumatique est réalisé entre deux points (371, 372) appartenant respectivement à la surface extérieure du sommet et à la surface radialement intérieure de la jante et positionnés dans le plan équatorial.

10.  Procédé de contrôle et/ou d'ajustement de pression d'un ensemble monté (31) selon l'une quelconque des revendications 1 à 9, le pneumatique (32) comprenant un sommet (38) prolongé par deux flancs (39) et étant symétrique par rapport au plan équatorial passant par le milieu du sommet, **caractérisé en ce qu**'on introduit dans la cavité du pneumatique l'interface de gonflage (36), par perçage du sommet (38) de pneumatique, la partie correspondante de paroi (34) de la cavité du pneumatique étant recouverte par le matériau auto obturant (35).

11. Dispositif de contrôle et/ou d'ajustement de pression d'un ensemble monté (1, 21, 31) pour un véhicule, l'ensemble monté étant constitué d'un pneumatique (2, 22, 32) préférentiellement « tubeless » monté sur une jante (3, 23, 33) et gonflé à une pression initiale, le pneumatique comprenant une surface intérieure constituant la paroi (4, 24, 34) de la cavité du pneumatique en contact avec l'air interne, la paroi de la cavité du pneumatique étant au moins en partie recouverte par un matériau auto obturant (5, 25, 35), **caractérisé en ce que** le dispositif de contrôle et/ou d'ajustement de pression comprend une interface de gonflage (6, 26, 36), destinée à être introduite dans la cavité du pneumatique, par perçage d'un trou dans la paroi de la cavité du pneumatique dans une partie recouverte par le matériau auto obturant.

12. Dispositif d'ajustement de pression d'un ensemble monté (1, 21, 31) selon la revendication 11, **caractérisé en ce que** l'interface de gonflage (6, 26, 36) est un tube creux de diamètre extérieur au plus égal à 4 mm, et préférentiellement au plus égal à 1.5 mm.

13. Dispositif de contrôle et/ou d'ajustement de pression d'un ensemble monté (1, 21, 31) pour un véhicule selon l'une quelconque des revendications 11 ou 12, **caractérisé en ce que** le dispositif de contrôle et/ou d'ajustement de pression comprend un moyen de mesure directe de pression (7), connecté à l'interface de gonflage, et/ou un moyen de mesure indirecte de pression (27, 37) permettant de mesurer la pression, sans entrer en contact avec l'air interne du pneumatique.

14. Dispositif de contrôle et/ou d'ajustement de pression d'un ensemble monté (21, 31) selon l'une quelconque des revendications 11 à 13, **caractérisé en ce que** le dispositif de contrôle et/ou d'ajustement de pression comprend un moyen de mesure indirecte de pression (27, 37) par mesure de la déformation du pneumatique selon la direction d'un écrasement du pneumatique.

15. Dispositif de contrôle et/ou d'ajustement de pression d'un ensemble monté (21, 31) selon la revendication 14, **caractérisé en ce que** le moyen de mesure indirecte de pression (27, 37) par mesure de la déformation selon la direction d'un écrasement du pneumatique comprend deux interfaces d'application de l'écrasement au pneumatique, destinées à entrer en contact avec deux points (271, 272; 371, 372) dont l'un au moins appartient à la surface extérieure du pneumatique en contact avec l'air atmosphérique.

16. Dispositif de contrôle et/ou d'ajustement de pression d'un ensemble monté (31) selon l'une quelconque des revendications 11 à 15, **caractérisé en ce que** le dispositif de contrôle et/ou d'ajustement de pression comprend une interface de gonflage (36) intégrée à au moins une interface d'application (371) de l'écrasement du moyen de mesure indirecte de pression.

17. Utilisation d'un procédé de contrôle et/ou d'ajustement de pression d'un ensemble monté (1, 21, 31), selon l'une quelconque des revendications 1 à 10, pour un véhicule à deux roues.

**Patentansprüche**

1. Verfahren zur Kontrolle und/oder zur Einstellung von Druck einer montierten Einheit (1, 21, 31) für ein Fahrzeug, wobei die montierte Einheit aus einem vorzugsweise "schlauchlosen" Luftreifen (2, 22, 32) besteht, der auf eine Felge (3, 23, 33) montiert ist und auf einen Anfangsdruck aufgepumpt ist, wobei der Luftreifen eine Innenfläche aufweist, welche die Wand (4, 24, 34) des Hohlraums des Luftreifens im Kontakt mit der Innenluft darstellt, wobei die Wand des Hohlraums des Luftreifens mindestens teilweise mit einem selbstverschließenden Material (5, 25, 35) überzogen ist, **dadurch gekennzeichnet, dass**, durch Bohren eines Lochs in die Wand des Hohlraums des Luftreifens in einem Bereich, der mit dem selbstverschließenden Material überzogen ist, eine Aufpumpschnittstelle (6, 26, 36) in den Hohlraum des Luftreifens eingeführt wird, und dadurch, dass die Aufpumpschnittstelle nach dem Aufpumpen aus dem Hohlraum des Luftreifens herausgezogen wird, und dadurch, dass das in die Wand des Hohlraums des Luftreifens gebohrte Loch nach dem Herausziehen der Aufpumpschnittstelle durch das selbstverschließende Material selbsttätig verschlossen wird.

2. Verfahren zur Kontrolle und/oder zur Einstellung von Druck einer montierten Einheit (1) nach Anspruch 1, **dadurch gekennzeichnet, dass** die Aufpumpschnittstelle (6) in den Hohlraum des Luftreifens vor dem Messen des Anfangsdrucks eingeführt wird, und dadurch, dass der Druck mittels der Aufpumpschnittstelle auf einen endgültigen Druck eingestellt wird, der mindestens gleich einem Solldruck ist.

3. Verfahren zur Kontrolle und/oder zur Einstellung von Druck einer montierten Einheit (21, 31) nach Anspruch 1, **dadurch gekennzeichnet, dass** die Aufpumpschnittstelle (26, 36) in den Hohlraum des Luftreifens, nach dem Messen des Anfangsdrucks und wenn der gemessene Anfangsdruck niedriger als ein Warndruck ist, eingeführt wird, und dadurch, dass der Druck mittels der Aufpumpschnittstelle auf einen endgültigen Druck eingestellt wird, der mindestens gleich einem Solldruck und unbedingt höher als der Warndruck ist.

4. Verfahren zur Kontrolle und/oder zur Einstellung von Druck einer montierten Einheit (21, 31) nach Anspruch 3, **dadurch gekennzeichnet, dass** der Solldruck mindestens gleich dem Warndruck ist, der um 0,75 bar erhöht ist.

5. Verfahren zur Kontrolle und/oder zur Einstellung von Druck einer montierten Einheit (1) nach irgendeinem der Ansprüche 1 bis 4, **dadurch gekennzeichnet, dass** der Druck während der Einstellung des Drucks mit Hilfe eines Mittels direkter Druckmessung (7) gemessen wird, das mit der Aufpumpschnittstelle verbunden ist.

6. Verfahren zur Kontrolle und/oder zur Einstellung von Druck einer montierten Einheit (21, 31) nach irgendeinem der Ansprüche 3 oder 4, **dadurch gekennzeichnet, dass** der Druck während der Einstellung von Druck mit Hilfe eines Mittels indirekter Druckmessung (27, 37) gemessen wird, ohne mit der Innenluft des Luftreifens in Kontakt zu kommen.

7. Verfahren zur Kontrolle und/oder zur Einstellung einer montierten Einheit (21, 31) nach irgendeinem der Ansprüche 3, 4 oder 6, **dadurch gekennzeichnet, dass** der Druck indirekt gemessen wird, indem die Verformung des Luftreifens in die Richtung einer Stauchung des Luftreifens ausgeführt zwischen zwei Punkten (271, 272; 371, 372) gemessen wird, von denen mindestens einer zu der äußeren Oberfläche des Luftreifens im Kontakt mit atmosphärischer Luft gehört, und indem der Druck mit Hilfe eines zuvor erstellten Modells bestimmt wird und indem die Verformung und der Druck in Verbindung gebracht werden.

8. Verfahren zur Kontrolle und/oder zur Einstellung von Druck einer montierten Einheit (21) nach Anspruch 7, wobei der Luftreifen (22) eine Lauffläche (28) umfasst, die um zwei Flanken (29) verlängert ist und die im Verhältnis zu der Äquatorialebene durch die Mitte der Lauffläche symmetrisch ist, **dadurch gekennzeichnet, dass** die Stauchung des Luftreifens zwischen zwei Punkten (271, 272) erfolgt, die jeweils zu der äußeren Oberfläche jeder Flanke gehören und im Verhältnis zu der Äquatorialebene symmetrisch sind.

9. Verfahren zur Kontrolle und/oder zur Einstellung von Druck einer montierten Einheit (31) nach Anspruch 7, wobei der Luftreifen (32) eine Lauffläche (38) umfasst, die um zwei Flanken (39) verlängert ist und im Verhältnis zu der Äquatorialebene durch die Mitte der Lauffläche symmetrisch ist, **dadurch gekennzeichnet, dass** die Stauchung des Luftreifens zwischen zwei Punkten (371, 372) erfolgt, die jeweils zu der äußeren Oberfläche der Lauffläche und zu der radial inneren Oberfläche der Felge gehören und in der Äquatorialebene angeordnet sind.

10. Verfahren zur Kontrolle und/oder zur Einstellung von Druck einer montierten Einheit (31) nach irgendeinem der Ansprüche 1 bis 9, wobei der Luftreifen (32) eine Lauffläche (38) umfasst, die um zwei Flanken (39) verlängert ist und im Verhältnis zu der Äquatorialebene durch die Mitte der Lauffläche symmetrisch ist, **dadurch gekennzeichnet, dass** die Aufpumpschnittstelle (36) in den Hohlraum des Luftreifens durch Durchbohren der Lauffläche (38) des Luftreifens eingeführt wird, wobei der entsprechende Bereich der Wand (34) des Hohlraums des Luftreifens mit dem selbstverschließenden Material (35) überzogen ist.

11. Vorrichtung zur Kontrolle und/oder zur Einstellung von Druck einer montierten Einheit (1, 21, 31) für ein Fahrzeug, wobei die montierte Einheit aus einem vorzugsweise "schlauchlosen" Luftreifen (2, 22, 32) besteht, der auf eine Felge (3, 23, 33) montiert ist und auf einen Anfangsdruck aufgepumpt ist, wobei der Luftreifen eine Innenfläche aufweist, welche die Wand (4, 24, 34) des Hohlraums des Luftreifens im Kontakt mit der Innenluft darstellt, wobei die Wand des Hohlraums des Luftreifens mindestens teilweise mit einem selbstverschließenden Material (5, 25, 35) überzogen ist, **dadurch gekennzeichnet, dass** die Vorrichtung zur Kontrolle und/oder zur Einstellung von Druck eine Aufpumpschnittstelle (6, 26, 36) umfasst, die dazu bestimmt ist, durch Bohren eines Lochs in die Wand des Hohlraums des Luftreifens in einem Bereich, der mit dem selbstverschließenden Material überzogen ist, in den Hohlraums des Luftreifens eingeführt zu werden.

12. Vorrichtung zur Einstellung von Druck einer montierten Einheit (1, 21, 31) nach Anspruch 11, **dadurch gekennzeichnet, dass** die Aufpumpschnittstelle (6, 26, 36) ein Hohlrohr mit einem Außendurchmesser von höchstens gleich 4 mm, und vorzugsweise von höchstens gleich 1,5 mm ist.

13. Vorrichtung zur Kontrolle und/oder zur Einstellung von Druck einer montierten Einheit (1, 21, 31) für ein Fahrzeug nach irgendeinem der Ansprüche 11 oder 12, **dadurch gekennzeichnet, dass** die Vorrichtung zur Kontrolle und/oder zur Einstellung von Druck ein Mittel direkter Druckmessung (7), das mit der Aufpumpschnittstelle verbunden ist, und/oder ein Mittel indirekter Druckmessung (27, 37) umfasst, das es ermöglicht, den Druck zu messen, ohne mit der Innenluft des Luftreifens in Kontakt zu kommen.

**14.** Vorrichtung zur Kontrolle und/oder zur Einstellung von Druck einer montierten Einheit (21, 31) nach irgendeinem der Ansprüche 11 bis 13, **dadurch gekennzeichnet, dass** die Vorrichtung zur Kontrolle und/oder zur Einstellung von Druck ein Mittel indirekter Druckmessung (27, 37) durch die Messung der Verformung des Luftreifens in die Richtung einer Stauchung des Luftreifens umfasst.

**15.** Vorrichtung zur Kontrolle und/oder zur Einstellung von Druck einer montierten Einheit (21, 31) nach Anspruch 14, **dadurch gekennzeichnet, dass** das Mittel indirekter Druckmessung (27, 37) durch Messen der Verformung in die Richtung einer Stauchung des Luftreifens zwei Ansatzschnittstellen der Stauchung des Luftreifens umfasst, die dazu vorgesehen sind, mit zwei Punkten (271, 272; 371, 372) in Kontakt zu kommen, von denen mindestens einer zu der äußeren Oberfläche des Luftreifens im Kontakt mit der atmosphärischen Luft gehört.

**16.** Vorrichtung zur Kontrolle und/oder zur Einstellung von Druck einer montierten Einheit (31) nach irgendeinem der Ansprüche 11 bis 15, **dadurch gekennzeichnet, dass** die Vorrichtung zur Kontrolle und/oder zur Einstellung von Druck eine Aufpumpschnittstelle (36) umfasst, die in mindestens eine Ansatzschnittstelle (371) der Stauchung durch das Mittel der indirekten Druckmessung integriert ist.

**17.** Verwendung eines Verfahrens zur Kontrolle und/oder zur Einstellung von Druck einer montierten Einheit (1, 21, 31), nach irgendeinem der Ansprüche 1 bis 10 für ein Fahrzeug mit zwei Rädern.

**Claims**

**1.** Method for monitoring and/or adjusting the pressure of a mounted assembly (1, 21, 31) for a vehicle, the mounted assembly being composed of a tyre (2, 22, 32), preferably tubeless, mounted on a rim (3, 23, 33) and inflated to an initial pressure, the tyre comprising an inner surface forming the wall (4, 24, 34) of the tyre cavity, in contact with the internal air, the wall of the tyre cavity being at least partially covered with a self-sealing material (5, 25, 35), **characterized in that** an inflation interface (6, 26, 36) is introduced into the tyre cavity by piercing a hole in the wall of the tyre cavity in an area covered by the self-sealing material; **in that** the inflation interface is extracted from the tyre cavity after inflation; and **in that** the pierced hole in the wall of the tyre cavity is sealed spontaneously by the self-sealing material after the extraction of the inflation interface.

**2.** Method for monitoring and/or adjusting the pressure of a mounted assembly (1) according to Claim 1, **characterized in that** the inflation interface (6) is introduced into the tyre cavity before the initial pressure measurement, and **in that** the pressure is adjusted to a final pressure, which is at least equal to a rated pressure, by means of the inflation interface.

**3.** Method for monitoring and/or adjusting the pressure of a mounted assembly (21, 31) according to Claim 1, **characterized in that** the inflation interface (26, 36) is introduced into the tyre cavity after the initial pressure measurement and if the measured initial pressure is below a warning pressure, and **in that** the pressure is adjusted to a final pressure, which is at least equal to a rated pressure and is in any case greater than the warning pressure, by means of the inflation interface.

**4.** Method for monitoring and/or adjusting the pressure of a mounted assembly (21, 31) according to Claim 3, **characterized in that** the rated pressure is at least equal to the warning pressure increased by 0.75 bar.

**5.** Method for monitoring and/or adjusting the pressure of a mounted assembly (1) according to any of Claims 1 to 4, **characterized in that** the pressure is measured, during the adjustment of the pressure, by a means of direct pressure measurement (7) connected to the inflation interface.

**6.** Method for monitoring and/or adjusting the pressure of a mounted assembly (21, 31) according to either of Claims 3 and 4, **characterized in that** the pressure is measured, during the adjustment of the pressure, by a means of indirect pressure measurement (27, 37), without any contact with the internal air of the tyre.

**7.** Method for monitoring and/or adjusting a mounted assembly (21, 31) according to any of Claims 3, 4 and 6, **characterized in that** the pressure is measured indirectly by measuring the deformation of the tyre, in a direction of flattening of the tyre, at two points (271, 272; 371, 372), of which one at least is located on the outer surface of the tyre in contact with the atmospheric air, and by determining the pressure with the aid of a model developed previously, which relates deformation to pressure.

**8.** Method for monitoring and/or adjusting the pressure of a mounted assembly (21) according to Claim 7, the tyre (22) comprising a crown (28) extended by two sidewalls (29) and being symmetrical with respect to the equatorial plane passing through the centre of the crown, **characterized in that** the tyre is flattened between two points (271, 272), one of which is located on the outer surface of each sidewall, the points being symmetrical with respect to the equatorial plane.

9. Method for monitoring and/or adjusting the pressure of a mounted assembly (31) according to Claim 7, the tyre (32) comprising a crown (38) extended by two sidewalls (39) and being symmetrical with respect to the equatorial plane passing through the centre of the crown, **characterized in that** the tyre is flattened between two points (371, 372), located, respectively, on the outer surface of the crown and on the radially inner surface of the rim, and positioned in the equatorial plane.

10. Method for monitoring and/or adjusting the pressure of a mounted assembly (31) according to any of Claims 1 to 9, the tyre (32) comprising a crown (38) extended by two sidewalls (39) and being symmetrical with respect to the equatorial plane passing through the centre of the crown, **characterized in that** the inflation interface (36) is introduced into the tyre cavity by piercing the crown (38) of the tyre, the corresponding part of the wall (34) of the tyre cavity being covered by the self-sealing material (35).

11. Device for monitoring and/or adjusting the pressure of a mounted assembly (1, 21, 31) for a vehicle, the mounted assembly being composed of a tyre (2, 22, 32), preferably tubeless, mounted on a rim (3, 23, 33) and inflated to an initial pressure, the tyre comprising an inner surface forming the wall (4, 24, 34) of the tyre cavity, in contact with the internal air, the wall of the tyre cavity being at least partially covered with a self-sealing material (5, 25, 35), **characterized in that** the pressure monitoring and/or adjustment device comprises an inflation interface (6, 26, 36) designed to be introduced into the tyre cavity by piercing a hole in the wall of the tyre cavity in an area covered by the self-sealing material.

12. Device for adjusting the pressure of a mounted assembly (1, 21, 31) according to Claim 11, **characterized in that** the inflation interface (6, 26, 36) is a hollow tube with an outside diameter of not more than 4 mm, and preferably not more than 1.5 mm.

13. Device for monitoring and/or adjusting the pressure of a mounted assembly (1, 21, 31) for a vehicle according to either of Claims 11 and 12, **characterized in that** the pressure monitoring and/or adjustment device comprises a means of direct pressure measurement (7), connected to the inflation interface, and/or a means of indirect pressure measurement (27, 37), adapted to measure the inflation pressure without coming into contact with the internal air of the tyre.

14. Device for monitoring and/or adjusting the pressure of a mounted assembly (21, 31) for a vehicle according to any of Claims 11 and 13, **characterized in that** the pressure monitoring and/or adjustment device comprises a means of indirect pressure measurement (27, 37), which operates by measuring the deformation of the tyre in a direction of flattening of the tyre.

15. Device for monitoring and/or adjusting the pressure of a mounted assembly (21, 31) according to Claim 14, **characterized in that** the means of indirect pressure measurement (27, 37) by measurement of the deformation in a direction of flattening of the tyre comprises two interfaces for applying flattening to the tyre, designed to come into contact with two points (271, 272; 371, 372), at least one of which is located on the outer surface of the tyre in contact with the atmospheric air.

16. Device for monitoring and/or adjusting the pressure of a mounted assembly (31) according to any of Claims 11 and 15, **characterized in that** the pressure monitoring and/or adjustment device comprises an inflation interface (36) integrated with the at least one interface (371) for applying the flattening force of the means of indirect pressure measurement.

17. Use of a method for monitoring and/or adjusting the pressure of a mounted assembly (1, 21, 31) according to any of Claims 1 to 10, for a two-wheeled vehicle.

FIG. 1

FIG. 2

FIG. 3

**FIG. 4**

**EP 2 595 845 B1**

**RÉFÉRENCES CITÉES DANS LA DESCRIPTION**

**Documents brevets cités dans la description**

- WO 2009000742 A1
- WO 2009000744 A1
- US 20090193937 A1